# EUROPÄISCHE PATENTSCHRIFT

(11) **EP 4 111 170 B1**
(45) Veröffentlichungstag und Bekanntmachung des Hinweises auf die Patenterteilung: **23.07.2025**
(21) Anmeldenummer: 21707249.5
(22) Anmeldetag: 22.02.2021
(51) Int. Cl.: G01N 17/00, G01N 27/22

(54) **KORROSIONSPRÜFGERÄT**
CORROSION TESTING DEVICE
DISPOSITIF D'ESSAI DE CORROSION

(30) Priorität: 26.02.2020 DE 202020101042 U
(43) Veröffentlichungstag der Anmeldung: 04.01.2023
(73) Patentinhaber: Köhler Automobiltechnik GmbH, 59558 Lippstadt (DE)
(72) Erfinder: RIEDEL, Jürgen, 10715 Berlin (DE); MÜLLER, Fabian, 59590 Geseke (DE)
(74) Vertreter: Ter Meer Steinmeister & Partner
(86) Internationale Anmeldenummer: PCT/EP2021/054335
(87) Internationale Veröffentlichungsnummer: WO 2021/170539

(56) Entgegenhaltungen:
- WO-A1-2011/153558
- DE-A1- 102018 105 766
- US-A- 2 937 524
- US-A1- 2003 214 310

## Beschreibung

Die Erfindung betrifft ein Korrosionsprüfgerät mit einer Prüfkammer, einem Klimatisierungssystem zum Aufrechterhalten einer kontrollierten Atmosphäre in der Prüfkammer, und einem Messsystem, das einen Fühlfinger mit einem auf einer Platine angeordneten Messelement zur Messung des Feuchtegehalts der Atmosphäre aufweist.

Ein Prüfgerät dieser Art ist aus WO 2011/153558 A1 bekannt. US 2 937 524 A und US 2003/214310 A1 beschreiben Beispiele für Fühlfinger, die ein auf einer Platine angeordnetes Messelement aufweisen.

Korrosionsprüfgeräte dienen dazu, die Korrosionsbeständigkeit von Maschinenteilen oder anderen Objekten zu testen, indem die Testobjekte in der Prüfkammer für eine definierte Zeit einer kontrollierten, korrosionsfördernden Atmosphäre ausgesetzt werden. Die Aufrechterhaltung der kontrollierten Atmosphäre erfordert insbesondere eine permanente und genaue Überwachung und ggf. Korrektur des Feuchtegehalts der Atmosphäre.

Der Fühlfinger hat bei den bekannten Korrosionsprüfgeräten nur eine begrenzte Standzeit, da er generell den gleichen korrodierenden Bedingungen ausgesetzt ist wie die Testobjekte.

Aufgabe der Erfindung ist es, ein Korrosionsprüfgerät zu schaffen, das geringere Wartungs- und Instandhaltungskosten verursacht.

Diese Aufgabe wird erfindungsgemäß dadurch gelöst, dass die Platine über Steckverbinder lösbar an einem Fühlfingersockel gehalten ist und vollflächig, allenfalls mit Ausnahme bestimmter Kontakt- oder Messflächen, in einer Korrosionsschutzbeschichtung gekapselt ist.

Da die Platine mit dem Messelement von dem Fühlfingersockel lösbar ist, kann die Platine ohne den Fühlfingersockel in ein Beschichtungsbad getaucht und auf diese Weise mit der Korrosionsbeschichtung versehen werden, die dann die Korrosion der Platine und der darauf angeordneten elektronischen Komponenten hemmt. Lediglich die Kontakte der Steckverbinder verbleiben außerhalb des Beschichtungsbades oder werden während der Beschichtung abgeklebt, so dass die Kontaktflächen beschichtungsfrei bleiben. Je nach Messprinzip kann es auch erforderlich sein, bestimmte Messflächen des Messelements, beispielsweise Elektroden eines kapazitiven Messelements, von der Beschichtung freizuhalten.

Ein weiterer vorteilhafter Effekt der Steckbarkeit der Platine besteht darin, dass nicht der gesamte Fühlfinger sondern nur die Platine ausgewechselt werden muss, wenn die Korrosion letztlich doch zu Schäden am Messsystem geführt hat. Insgesamt kann auf diese Weise eine beträchtliche Kostenersparnis erreicht werden.

Vorteilhafte Ausgestaltungen der Erfindung sind in den Unteransprüchen angegeben.

Geeignete Beschichtungsmaterialien für die Korrosionsschutzbeschichtung sind beispielsweise Parylene.

In einer Ausführungsform kann der Fühlfinger in der Wand einer Leitung angeordnet sein, über die Luft in die Prüfkammer zugeführt oder aus der Prüfkammer abgezogen wird. Der Fühlfinger kann dann so weit in die Leitung hineinragen, dass sich das Messelement etwa in der Mitte der Leitung befindet und von der Luft umströmt wird, deren Feuchtegehalt gemessen werden soll. In einem Leitungsabschnitt zwischen der Prüfkammer und dem Fühlfinger kann dann ein Sperrelement angeordnet sein, mit dem sich die Leitung absperren lässt. Auf diese Weise kann der Fühlfinger zeitweise von der Atmosphäre in der Prüfkammer getrennt werden, beispielsweise während Prüfungen, bei denen in der Prüfkammer ein besonders korrosiver Salznebel versprüht wird.

In einer anderen Ausführungsform kann die Beschichtung so robust sein, dass der Fühlfinger unmittelbar in der Wand der Prüfkammer angeordnet werden kann, so dass die Platine ständig der Atmosphäre in der Prüfkammer ausgesetzt ist.

Im folgenden werden Ausführungsbeispiele anhand der Zeichnung näher erläutert.

Es zeigen:
- Fig. 1: eine schematische Skizze eines Korrosionsprüfgerätes gemäß der Erfindung; und
- Fig. 2: eine Skizze eines Korrosionsprüfgerätes gemäß einer anderen Ausführungsform.

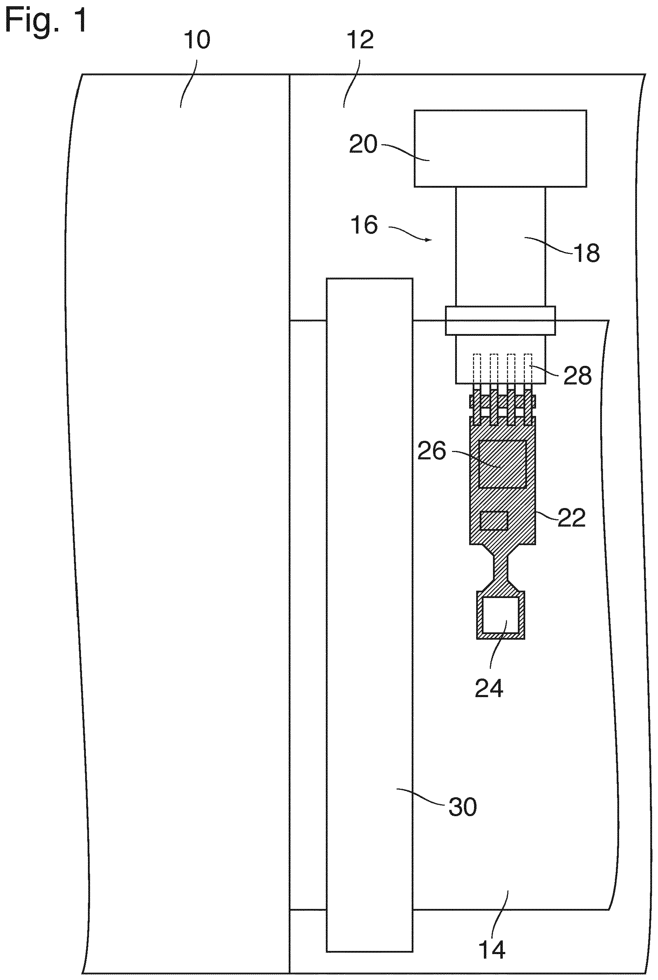

In Fig. 1 ist schematisch ein Teil eines Korrosionsprüfgerätes gezeigt, das eine Prüfkammer 10 aufweist, in der Prüfobjekte für eine bestimmte Zeit in einer kontrollierten Atmosphäre aufbewahrt werden können. Die Atmosphäre wird hinsichtlich Temperatur und chemischer Zusammensetzung, insbesondere Feuchtegehalt, so eingestellt, dass die Korrosion an den Prüfobjekten beschleunigt wird, so dass sich der Korrosionsfortschritt schon nach überschaubarer Zeit feststellen und bewerten lässt.

An die Prüfkammer 10 ist ein Klimaschrank 12 angebaut, der verschiedene nicht gezeigte Aggregate wie Heizeinrichtungen, Dampferzeuger und dergleichen enthält, mit denen die in die Prüfkammer 10 einzuleitende Luft konditioniert wird. In der Zeichnung ist lediglich eine Leitung 14 dargestellt, über welche die konditionierte Luft mit Hilfe eines Gebläses in die Prüfkammer 10 eingeleitet wird.

In der Wand der Leitung 14 ist ein Fühlfinger 16 so angeordnet, dass er durch die Wand hindurch in das Innere der Leitung 14 ragt. Ein Fühlfingersockel 18 liegt teils innerhalb und teils außerhalb der Leitung 14 und trägt am äußeren Ende, außerhalb der Leitung 14, einen Anschlusskasten 20 und am inneren Ende eine Platine 22, die den Fühlfinger in das Innere der Leitung 14 hinein verlängert. An seinem freien Ende, das etwa in der Mitte der Leitung 14 liegt, trägt die Platine 22 ein Messelement 24, beispielsweise ein kapazitives Messelement, zur Messung des Feuchtegehalts der durch die Leitung 14 strömenden Luft. Wahlweise kann die Platine auch einen Temperaturfühler tragen oder das Messelement 24 kann auch zur Messung der Temperatur ausgebildet sein. Die Platine 22 trägt außerdem verschiedene elektronische Komponenten 26, die zur Ansteuerung des Messelements 24 und zur Vorauswertung des Messergebnisses dienen. Über Steckverbinder 28 ist die Platine lösbar auf dem Fühlfingersockel 18 gehalten und elektrisch mit dem Anschlusskasten 20 verbunden, so dass das Messsignal an eine nicht gezeigte Steuereinrichtung weitergeleitet werden kann.

Zum Schutz gegen den korrosiven Einfluss der feuchten Luft trägt die Platine 22 einschließlich der darauf angeordneten elektronischen Komponenten 26 nahezu auf ihrer gesamten Oberfläche eine Korrosionsschutzbeschichtung, beispielsweise eine Parylenbeschichtung, die in der Zeichnung durch Schraffur angedeutet ist. Ausgespart von dieser Beschichtung sind lediglich die Kontakte der Steckverbinder 28 und im gezeigten Beispiel auch eine Messfläche des Messelements 24. Die elektronischen Komponenten 26 und das Substrat der Platine 22 sowie auch die elektrischen Zuleitungen zu dem Messelement 24 sind so wirksam gegen Korrosion geschützt, so dass trotz der korrosiven Atmosphäre eine lange Standzeit des Fühlfingers 16 erreicht wird. Lediglich die Messfläche des Messelements 24, beispielsweise eine Elektrode, ist den korrosiven Einflüssen ausgesetzt. Um eine längere Standzeit zu erreichen, kann für diese Elektrode ein besonders korrosionsfestes Material verwendet werden, während alle übrigen Leitungen und Elektroden auf der Platine 22 aus kostengünstigeren Materialien hergestellt werden können.

Wenn das Ende der Standzeit des Messelements 24 erreicht ist, kann der Fühlfinger 16 vorübergehend ausgebaut werden, so dass die Steckverbindung zwischen der Platine 22 und dem Fühlfingersockel 18 gelöst werden kann und die Platine durch eine neue Platine ausgetaucht werden kann. Bei der neuen Platine können die unbeschichteten Kontakte der Steckverbinder 28 mit einer den elektrischen Kontakt fördernden Substanz, beispielsweise einer Silberleitpaste bestrichen werden.

Wahlweise kann die Platine von ein lösbaren, luftdurchlässigen Schutzkappe (nicht gezeigt) umgeben sein Die Schutzkappe kann beispielsweise durch einen PTFE-Sinterfilter mit hoher chemischer Beständigkeit gebildet werden.

In der Leitung 14 ist zwischen der Prüfkammer 10 und dem Teil der Leitung, der den Fühlfinger 16 enthält, ein Sperrelement 30 angeordnet, mit dem sich der den Fühlfinger aufnehmende Teil der Leitung 14 strömungsmäßig vom Inneren der Prüfkammer 10 trennen lässt. Das erlaubt es, den Fühlfinger 16 zusätzlich gegen Korrosion zu schützen, wenn die Prüfobjekte während bestimmter Perioden der Testphase einer besonders korrosiven Atmosphäre ausgesetzt werden, beispielsweise wenn in der Prüfkammer 10 (über eine andere Leitung als die Leitung 14) ein Salznebel versprüht wird.

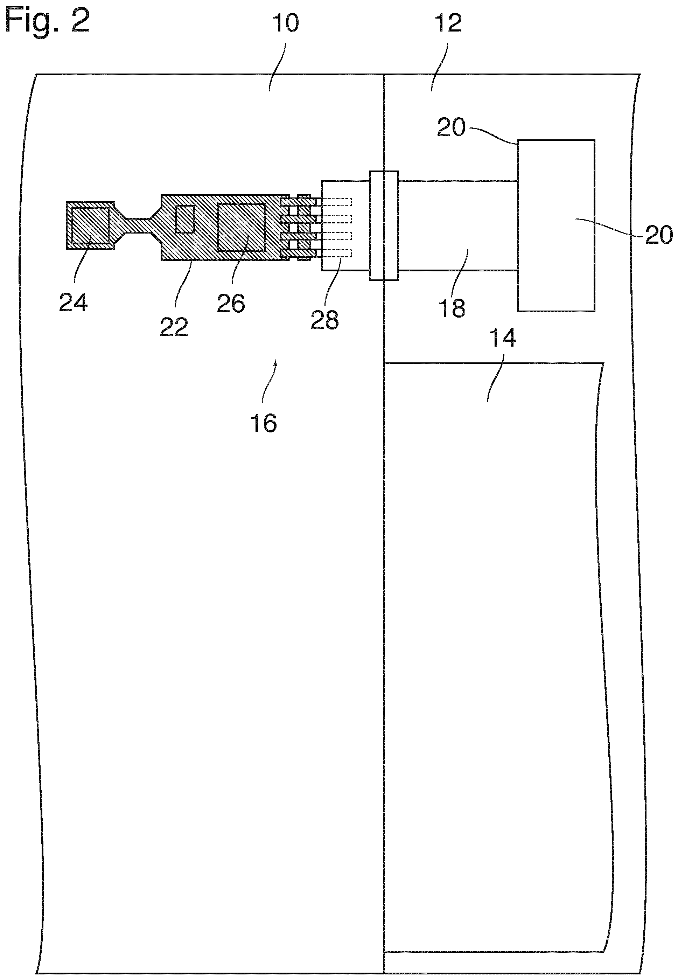

In einer anderen Ausführungsform kann die Platine 22 mit ihrer korrosionshemmenden Beschichtung so robust ausgelegt sein, dass sie auch dem aggressiven Salznebel standhält. In dem Fall kann der Fühlfinger 16 auch so in der Trennwand zwischen der Prüfkammer 10 und dem Klimaschrank 12 angeordnet sein, dass er direkt in die Prüfkammer hineinragt, wie in Fig. 2 gezeigt ist. In dem Fall kann das Sperrelement in der Leitung 14 entfallen.

Die Messfläche des Messelements 24 braucht nur dann von der Korrosionsschutzbeschichtung ausgespart zu werden, wenn das verwendete Messprinzip verlangt, dass eine Elektrode des Messelements unmittelbar der zu messenden Atmosphäre ausgesetzt ist. Bei einem anderen Messprinzip, beispielsweise bei einem kapazitiven Senso, der ein elektrisches Feld außerhalb des eigentlichen Messelements erzeugt und die Dielektrizität der umgebenden Luft auch durch die Beschichtung hindurch messen kann, lässt sich auch das Messelement 24 vollständig durch die Beschichtung schützen, wie in Fig. 2 durch Schraffur angedeutet ist.

## Patentansprüche

1. Korrosionsprüfgerät mit einer Prüfkammer (10), einem Klimatisierungssystem (12) zum Aufrechterhalten einer kontrollierten Atmosphäre in der Prüfkammer (10), und einem Messsystem, das einen Fühlfinger (16) mit einem auf einer Platine (22) angeordneten Messelement (24) zur Messung des Feuchtegehalts der kontrollierten Atmosphäre aufweist, **dadurch gekennzeichnet, dass** die Platine (22) über Steckverbinder (28) lösbar an einem Fühlfingersockel (18) gehalten ist und vollflächig, allenfalls mit Ausnahme bestimmter Kontakt- oder Messflächen, in einer Korrosionsschutzbeschichtung gekapselt ist.

2. Korrosionsprüfgerät nach Anspruch 1, bei dem die Korrosionsschutzbeschichtung eine Parylenbeschichtung ist.

3. Korrosionsprüfgerät nach Anspruch 1 oder 2, bei dem die Korrosionsschutzbeschichtung eine Messfläche auf dem Messelement (24) freilässt.

4. Korrosionsprüfgerät nach Anspruch 1 oder 2, bei dem das Messelement (24) vollständig mit der Korrosionsschutzbeschichtung beschichtet ist.

5. Korrosionsprüfgerät nach einem der vorstehenden Ansprüche, bei dem der Fühlfinger (16) in einer Wand einer Leitung (14) angeordnet ist, die mit dem Inneren der Prüfkammer (10) verbindbar ist.

6. Korrosionsprüfgerät nach Anspruch 5, bei dem die Leitung (14) zwischen dem Fühlfinger (16) und der Prüfkammer (10) durch ein Sperrelement (30) absperrbar ist.

7. Korrosionsprüfgerät nach einem der Ansprüche 1 bis 4, bei dem der Fühlfinger (16) in einer Wand der Prüfkammer (10) angeordnet ist und mit seiner Platine (22) in das Innere der Prüfkammer hineinragt.

## Claims

1. A corrosion testing device comprising a test chamber (10), a climate conditioning system (12) for maintaining a controlled atmosphere in the test chamber (10), and a measurement system comprising a feeler (16) having a measurement element (24) arranged on a printed circuit board (22) for measuring the moisture content of the atmosphere, **characterized in that** the printed circuit board (22) is detachably held on a feeler base (18) via plug connectors (28) and is, with the possible exception of certain contact or measurement surfaces, fully encapsulated in an anti-corrosion coating.

2. The corrosion testing device according to claim 1, wherein the anti-corrosion coating is a parylene coating.

3. The corrosion testing device according to claim 1 or 2, wherein the anti-corrosion coating exposes a measurement surface of the measurement element (24).

4. The corrosion testing device according to claim 1 or 2, wherein the measurement element (24) is fully coated with the anti-corrosion coating.

5. The corrosion testing device according to any of the preceding claims, wherein the feeler (16) is arranged in a wall of a conduit (14) that is connectable to the interior of the test chamber (10).

6. The corrosion testing device according to claim 5, wherein the conduit (14) between the feeler (16) and the test chamber (10) is adapted to be blocked by a blocking member (30).

7. The corrosion testing device according to any of the claims 1 to 4, wherein the feeler (16) is arranged in a wall of the test chamber (10) and has its printed circuit board (22) projecting into the interior of the test chamber.

## Revendications

1. Dispositif d'essai de corrosion comprenant une chambre d'essai (10), un système de climatisation (12) pour maintenir une atmosphère contrôlée dans la chambre d'essai (10) et un système de mesure comprenant un palpeur (16) avec un élément de mesure (24) disposé sur une carte circuit imprimé (22) pour mesurer la teneur en humidité de l'atmosphère, **caractérisé par le fait que** la carte de circuit imprimé (22) est maintenu de manière amovible sur une base de palpeur (18) par des connecteurs (28) et est, à l'exception éventuelle de certaines surfaces de contact ou de mesure, entièrement encapsulé dans un revêtement anti-corrosion.

2. Dispositif d'essai de corrosion selon la revendication 1, dans lequel le revêtement anti-corrosion est un revêtement de parylène.

3. Dispositif d'essai de corrosion selon la revendication 1 ou 2, dans lequel le revêtement anti-corrosion expose une surface de mesure de l'élément de mesure (24).

4. Dispositif d'essai de corrosion selon la revendication 1 ou 2, dans lequel l'élément de mesure (24) est entièrement recouvert du revêtement anticorrosion.

5. Dispositif d'essai de corrosion selon l'une des revendications précédentes, dans lequel le palpeur (16) est disposé dans une paroi d'un conduit (14) pouvant être relié à l'intérieur de la chambre d'essai (10).

6. Dispositif d'essai de corrosion selon la revendication 5, dans lequel le conduit (14) entre le palpeur (16) et la chambre d'essai (10) est conçu pour être bloqué par un élément de blocage (30).

7. Dispositif d'essai de corrosion selon l'une des revendications 1 à 4, dans lequel le palpeur (16) est disposé dans une paroi de la chambre d'essai (10) et a sa carte de circuit imprimé (22) faisant saillie à l'intérieur de la chambre d'essai.
